Europäisches Patentamt

European Patent Office

Office européen des brevets

(19)

(11) Veröffentlichungsnummer: **0 278 341**
**A2**

(12) **EUROPÄISCHE PATENTANMELDUNG**

(21) Anmeldenummer: **88101332.0**

(22) Anmeldetag: **29.01.88**

(51) Int. Cl.4: **G01L 19/00 , G01L 9/06 ,
G01L 7/08**

(30) Priorität: 06.02.87 DE 3703685

(43) Veröffentlichungstag der Anmeldung:
**17.08.88 Patentblatt 88/33**

(84) Benannte Vertragsstaaten:
**AT CH DE ES FR GB IT LI NL SE**

(71) Anmelder: **RBS - TECHNISCHE ANLAGEN UND
APPERATEBAU GMBH
Franz-Brombach-Strasse 14
D-8058 Erding(DE)**

(72) Erfinder: **Pelzer, Gerhard
Heigelweg 1
D-8059 Walpertskirchen(DE)**

(74) Vertreter: **Mehl, Ernst, Dipl.-Ing.
Postfach 22 13 17
D-8000 München 22(DE)**

(54) **Verfahren zur Montage eines Drucksensors sowie Drucksensor.**

(57) Die Erfindung betrifft einen Drucksensor (10), insbesondere zur Erfassung hoher Drücke in Flüssigkeiten od. dgl., mit einem Sensorelement (18), das in einen druckfesten Meßzellenkörper (22) eingebaut ist und über eine Membran (20) mit dem zu messenden Medium in Verbindung steht, wobei sich in dem Raum (30) zwischen der Membran und dem Sensorelement eine nicht kompressible Flüssigkeit (32) befindet. Die Membran (20) ist im druckfreien Zustand spannungsfrei gehalten, und der Raum (30) ist vollständig von einem gegenüber dem herrschenden Betriebsdruck auch bei mechanischen Erschütterungen stabilen druckaufnehmenden Meßzellenkörper (22) ventilfrei flüssigkeitsdicht umgeben.

FIG 1

## Verfahren zur Montage eines Drucksensors sowie Drucksensor

Die Erfindung betrifft ein Verfahren zur Herstellung eines Drucksensors gemäß dem Oberbegriff von Anspruch 1 sowie einen Drucksensor gemäß dem Oberbegriff von Anspruch 4.

Derartige Drucksensoren finden insbesondere für die Messung von hohen Drücken bei etwa 400 bar Anwendung. Ein Sensorelement - üblicherweise ein Piezo-Widerstandselement - wird zur Messung verwendet, wobei der Betriebsdruck des zu messenden Mediums über eine Membran und eine zwischen der Membran und dem Sensorelement befindliche Flüssigkeit - beispielsweise Siliconöl - übertragen wird.

Es ist bereits ein gattungsgemäßer Drucksensor vorgeschlagen worden, bei welchem der Raum zwischen der Membran und dem Sensorelement von einem druckfesten und ringförmigen Meßzellenkörper umgeben ist. Um die hohen Betriebsdrücke bei den vergleichsweise kleinen Abmessungen konstruktiv bewältigen zu können, werden Meßzellenkörper, Membran und Sensorelement und ggf. auch der Tragkörper mittels Laserstrahl miteinander verschweißt. Um in den geschlossenen Raum Siliconöl einbringen zu können, ist seitlich eine Bohrung vorgesehen, in die nach Fertigstellung der aus Meßzellenkörpern, Membran und Sensorelement bestehenden Meßzelle Siliconöl eingefüllt wird. Diese Bohrung ist mit einem federbelasteten Kugelventil verschlossen.

Mit einem derartigen System lassen sich vergleichsweise gute Meßgenauigkeiten bei hohen Drücken erzielen, wenn und solange die Siliconölfüllung vollständig besteht. Bereits eine kurzzeitiUndichtigkeit des Kugelventils aufgrund einer mechanischen Störung führt jedoch zu einem Flüssigkeitsverlust, was bewirkt, daß die Membran sich bei Druckaufbringung nach innen wölbt. Dadurch werden unvertretbare Nichtlinearitäten eingebracht, so daß die in der Herstellung sehr teure Meßzelle nicht mehr verwendbar ist.

Demgegenüber liegt der Erfindung die Aufgabe zugrunde, ein Verfahren zur Herstellung eines Drucksensors gemäß dem Oberbegriff von Anspruch 1 sowie einen Drucksensor gemäß dem Oberbegriff von Anspruch 4 zu schaffen, bei welchem neben einer preisgünstigen Herstellung eine Sicherheit gegenüber mechanischen Erschütterungen gegeben ist, wobei zudem die Genauigkeit langzeitstabilisiert ist.

Diese Aufgabe wird erfindungsgemäß durch Anspruch 1 gelöst. Vorteilhafte Weiterbildungen ergeben sich aus den Unteransprüchen.

Besonders günstig ist die Vormontage der Membran und des gegenüber einem Trägerkörper separaten Meßzellenkörpers. Dadurch wird ermöglicht, daß der für die Druckübertragung auf das Sensorelement mit Flüssigkeit gefüllte Raum zunächst offenbleibt, bis er vollständig, d.h. luftblasenfrei, mit Flüssigkeit gefüllt werden kann. Dies kann auf verschiedene Weisee geschehen, beispielsweise durch einfaches Eintauchen in die Flüssigkeit, wie es gemäß Anspruch 2 vorgesehen ist.

Dadurch, daß erst danach die Meßzelle fertig montiert wird, indem das Sensorelement flüssigkeitsdicht verbunden wird, ist es möglich, ohne jegliches Ventil auszukommen, so daß der Meßzellenkörper als massiver Ringkörper ausgebildet sein kann, der den in dem Raum bestehenden Druck abfangen kann. Durch diese Bauweise ist der erfindungsgemäße Drucksensor insbesondere auch für starke Druckspitzen geeignet. Die möglichen Druckspitzen werden praktisch nur durch das physikalisch dem Sensorelement zuträgliche Maß beschränkt. Dabei ist es gemäß einer vorteilhaften Ausgestaltung vorgesehen, den Boden des als Sensorelement verwendeten Chips zusätzlich über eine Druckaufnahmescheibe aus Stahl zu stützen. Diese vermindert eine über den kritischen Bereich hinausgehende Durchbiegung des Chips, ohne die Zuführung der Anschlußdrähte zu behindern.

Besonders vorteilhaft ist ferner die schwimmende Aufhängung des Sensorelementes über das elastische Formteil. Hierdurch wird die Empfindlichkeit gegenüber Überlast-druckspitzen weiter gemindert, etwaige Druckspitzen werden stark gedämpft, so daß ein schnelles Abschwingen erfolgt.

Ferner können hierdurch unerwünschte thermodynamische Einwirkungen von außen soweit wie möglich vermieden werden. Die Leitfähigkeit des auf Metall montierten Sensorchips ist immer größer als diejenige des elastischen Formteils, so daß innerhalb des in einer Brückenschaltung in Chipform aufgebrachten Sensorelementes höchstens ein vernachlässigbarer Temperaturgradient besteht.

Besonders vorteilhaft ist ferner, daß das gemäß einer vorteilhaften Weiterbildung verwendete elastische Formteil an mehreren Stellen zugleich als Dichtung wirkt. Damit werden nicht nur eine Mehrzahl von Dichtungen eingespart; es ist vielmehr auch ein lediglich geringer Anpreßdruck erforderlich, um aufgrund der Keilwirkung der Dichtungslippen eine zuverlässige Abdichtung zu erreichen. Darüber hinaus eröffnet das erfindungsgemäße Formteil die Möglichkeit, einzelne Komponenten des erfindungsgemäßen Drucksensors auszutauschen, falls - beispielsweise aufgrund von Überhitzung - ein Austausch eines Elementes erforderlich sein sollte.

Besonders vorteilhaft ist ferner, daß aufgrund der vorhandenen Elastizität des Formteils ein Füllen des Raumes zwischen der Membran und dem Sensorelement möglich ist, und dennoch die erforderliche Maßtoleranz zwischen dem Innendurchmesser des Meßzellenkörpers und dem Außendurchmesser des Sensorelementes eingehalten werden kann.

Die Montage des erfindungsgemäßen Drucksensors erfolgt zweckmäßigerweise in einem Siliconölbad, wobei die vormontierte Kombination aus dem Meßzellenkörper und der in das elastische Formteil einvulkanisierten Membran so in das Siliconölbad gelegt wird, daß die Membran sich unten befindet und der oberhalb der Membran befindliche Raum vollständig mit dem Siliconöl gefüllt wird. Das zweckmäßigerweise bereits seit einiger Zeit in dem Siliconölbad befindliche Sensorelement wird dann von oben langsam in den Raum abgesenkt. Das durch das Sensorelement verdrängte Siliconöl kann während des Absenkens seitlich nach oben entweichen. Mit diesem Verfahren wird eine vollständig lufteinschlußfreie Füllung des Raumes erzielt.

Besonders vorteilhaft ist es, daß die Membran sich nach der Montage in spannungsfreiem Zustand befindet, so daß Nichtlinearitäten durch die Membran vermieden werden können. Durch konzentrische Nuten und/oder Rippen kann das Widerstandsmoment der Membran gegenüber der vertikalen Auslenkung weiter vermindert werden.

In dem Fall, daß das Sensorelement besonders tief in das Formteil eingedrückt werden soll, um eine besonders hohe Dichtwirkung zu erzielen, kann zudem folgendes Verfahren angewendet werden: Die in dem Siliconöl befindliche Kombination aus Membran und Meßzellenkörper wird an der Membran von einem geeignet geformten Dorn abgestützt, während das Sensorelement in das Formteil eingedrückt wird und dadurch der Raum zwischen Membran und Sensorelement abgedichtet wird. Dadurch entsteht eine Einwärtswölbung der Membran, die durch Festschrauben des Verschlußteils, das die Abdichtwirkung des Formteils gegenüber dem Tragkörper erzeugt, kompensiert wird.

Da die Druckkraft des Verschlußteils über eine Dichtlippe des Formteils, den Meßzellenkörper und eine weitere Dichtlippe des Formteils auf den Tragkörper übertragen wird, ohne daß die Membran oder das Sensorelement hiervon beeinflußt würden, beeinflußt die von Drucksensor zu Drucksensor aufgrund von Materialtoleranzen möglicherweise unterschiedliche Einschraubkraft des Verschlußteils in den Tragkörper nicht die Linearität des Drucksensors, denn die Membran bleibt spannungsfrei.

Die gemäß einer vorteilhaften Weiterbildung vorgesehene Prallfläche dient dazu, extreme Druckwellen abzumildern, die entstehen, wenn eine Leitung, an die der erfindungsgemäße Drucksensor angeschlossen ist, zunächst leer ist und dann mit einer beispielsweise unter 200 bar stehenden Flüssigkeit schlagartig gefüllt wird. Da der zwischen der Prallfläche und der Membran befindliche Raum zunächst mit Luft gefüllt ist, vermag die Druckwelle die Membran nicht zu erreichen, sondern wird über die Prallfläche abgefangen. Erst wenn das zu messende Medium die Düsenöffnungen in der Prallfläche durchtreten und den Raum zwischen der Prallfläche und der Membran vollständig gefüllt hat, besteht eine imkompressible Verbindung zu der Leitung, an welche der Drucksensor angeschlossen ist. Dann kann der erfindungsgemäße Drucksensor etwaige Druckänderungen sehr exakt messen, da Druckimpulse durch die Öffnungen in der Prallfläche praktisch verlustfrei weitergeleitet werden können.

Besonders vorteilhaft ist die seitliche Anbringung der Düsenöffnungen, denn dann geschieht das Befüllen des Raumes zwischen der Prallfläche und der Membran dergestalt, daß die Flüssigkeitsströme nicht mittelbar auf die Membran gerichtet sind.

Weitere Vorteile, Einzelheiten und Merkmale sind in der nachfolgenden Beschreibung einer Ausführungsform der Erfindung anhand der Zeichnung näher erläutert.

Es zeigen:

Fig. 1 ein Ausführungsbeispiel eines erfindungsgemäßen Drucksensors, teilweise im Schnitt, und

Fig. 2 eine in einem erfindungsgemäßen Drucksensor verwendete Meßzelle vor der Montage des Sensorelements.

Eine Ausführungsform eines erfindungsgemäßen Drucksensors 10 weist einen Tragkörper 12, ein Verschlußteil 14 sowie eine Meßzelle 16 auf. Die Meßzelle 16 besteht aus einem Sensorelement 18, einer Membran 20 und einem Meßzellenkörper 22. Die Membran 20 ist in einem Formteil 24 aus Polymerisat einvulkanisiert. Der Meßzellenkörper 22 weist einen ringförmigen Grundaufbau auf. Das Formteil 24 erstreckt sich über die ganze Höhe des Meßzellenkörpers 22 und übergreift diesen mit Dichtlippen 26 und 28. Der von dem Formteil 24, der Membran 20 und dem Sensorelement 18 umschlossene Raum 30 ist mit Siliconöl 32 luftblasenfrei gefüllt.

Die Meßzelle 16 liegt über die Dichtlippe 26 an einer Schulter 34 an dem Tragkörper 12 an. Dadurch wird ein in dem Tragkörper 12 vor der Membran 20 sich erstreckender zylindrischer Raum 36 zur Seite hin abgedichtet. Der Raum 36 ist im Betrieb mit dem Medium gefüllt, dessen Druck zu messen ist. Er ist an der der Membran 20 gegenüberliegenden Seite von einem Wandteil 38 abgeschlossen. Das Wandteil 38 weist einen hutförmigen Grundaufbau auf, wobei der vorspringende Teil von einer Prallfläche 40 gebildet wird. Zweckmäßigerweise wird das Wandteil 38 in den Tragkörper 12 eingepreßt. In dem zylindrischen Teil 42 des Wandteils 38 sind Düsenöffnungen 44a und 44b vorgesehen, die so bemessen und ausgerichtet sind, daß Sie beim Befüllen des Raumes 36 mit Flüssigkeit das plötzliche Auftreffen von Flüssigkeit auf die Membran 20 verhindern, jedoch im Betrieb, wenn der Raum 36 mit Flüssigkeit gefüllt ist, Druckschwankungen verlustfrei weiterleiten können. Vorzugsweise sind vier um den Umfang gleichmäßig verteilte Düsenöffnungen vorgesehen.

Im eingebauten Zustand wird die Meßzelle 16 zwischen dem Verschlußteil 14 und der Schulter 34 des Tragkörpers 12 gehalten. Hierzu ist an dem Verschlußteil 14 ein Außengewinde 46 vorgesehen, das in ein entsprechendes Innengewinde 48 des Tragkörpers 12 eingreift. Das Verschlußteil 14 weist eine - nicht dargestellte - Zentralbohrung auf, die für die Zuleitung der Anschlußdrähte zu dem Sensorelement 18 vorgesehen ist. Auf dem Verschlußteil 14 ist eine Druckaufnahmescheibe 50 abgestützt, die aus V4A-Stahl besteht und - ebenfalls nicht dargestellte - kleinere Öffnungen für die Anschlußdrähte des Sensorelements 18 aufweist. Zur elektrischen Isolation des Sensorelements 18 ist auf der Druckaufnahmescheibe 50 eine Isolierstoffscheibe 52 vorgesehen, die ebenfalls von den Anschlußdrähten durchtreten wird. Auf der Isolierstoffscheibe 52 aus glasfaserverstärktem Epoxydharz ist das Sensorelement 18 abgestützt. Ferner wird in eingeschraubtem Zustand des Verschlußteils 14 über die Isolie rstoffscheibe 52 Druck auf die Dichtlippe 28 des Formteils 24 ausgeübt. Da der Meßzellenkörper 22 mit einem geringen Spiel in dem Tragkörper 12 geführt ist, wirkt der von dem Verschlußteil 14 ausgeübte Druck zugleich auch auf die Dichtlippe 26.

Das erfindungsgemäß vorgesehene Zusammenwirken von Tragkörper 12, Verschlußteil 14 und Formteil 24 erlaubt somit die membranseitige und die sensorseitige Abdichtung des Raumes 30 sowie die seitliche Abdichtung des Raumes 36 gegenüber der Außenwelt in einem Zug. Aufgrund der besonderen Form der Dichtlippen 26 und 28 kann der in dem Formteil herrschende Druck 24 gering sein.

Es ist günstig, wenn die Dichtlippe 28 zwischen dem Meßzellenkörper 22 und dem Verschlußteil 14 sehr dünn ist und gegenüber der Dichtlippe 26 eine geringere Elastizität aufweist. Hierdurch wird eine schwimmende Lagerung der Meßzelle 16 ermöglicht, die eine Unempfindlichkeit gegenüber Linearitätsfehlern aufgrund der durch die Verschraubung von Verschlußteil 14 und Tragkörper 12 miteinander erzeugten Druckkraft bewirkt. Die Membran 20 bleibt dann unabhängig von der Größe dieser Druckkraft immer in der gleichen spannungsfreien Lage und kann das Meßergebnis nicht verfälschen.

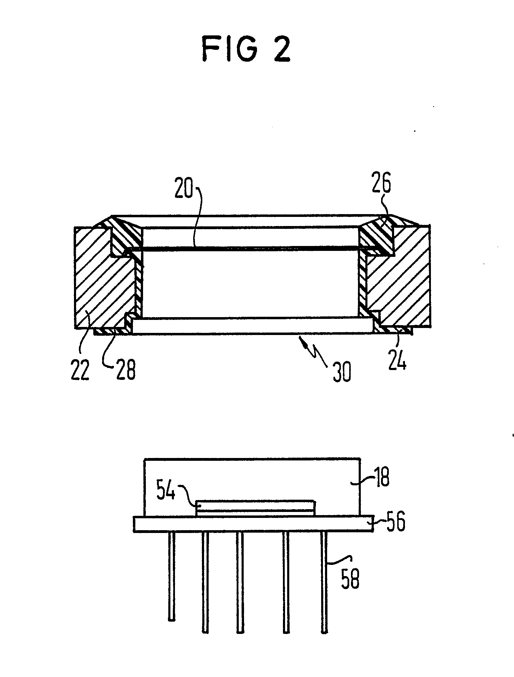

In der Darstellung gemäß Fig. 2 sind gleiche Teile mit gleichen Bezugszeichen bezeichnet. Die vormontierte Kombination aus der Membran 20, die in das Formteil 24 einvulkanisiert ist, und dem Meßzellenkörper 22 wird von dem - separat dargestellten - Sensorelement 18 abgeschlossen. Dies geschieht in einem Siliconölbad, wobei sichergestellt sein muß, daß der gesamte Raum 30, der von dem Formteil 24 umgeben ist, luftblasenfrei mit Siliconöl gefüllt ist. Besonders vorteilhaft ist es, kurz vor dem Verschließen des Raumes 30 mit dem Sensorelement 18 etwas Druck auf die Membran 20 in Richtung auf den Raum 30 hin auszuüben. Die Größe des - empirisch zu bestimmenden - Druckes sollte so gewählt werden, daß sich die Membran 20 nach dem Verschließen des Raumes 30 in völlig spannungsfreiem Zustand befindet.

Zweckmäßigerweise wird bei der Montage des Sensorelementes die vorbezeichnete Kombination um 180° gedreht und auf einen Dorn gelegt, so daß einerseits Druck auf die Membran ausgeübt wird und andererseits etwaige Luftblasen, die sich in dem Raum 30 befinden, aufsteigen können, bevor das Sensorelement 18 den Raum verschließt.

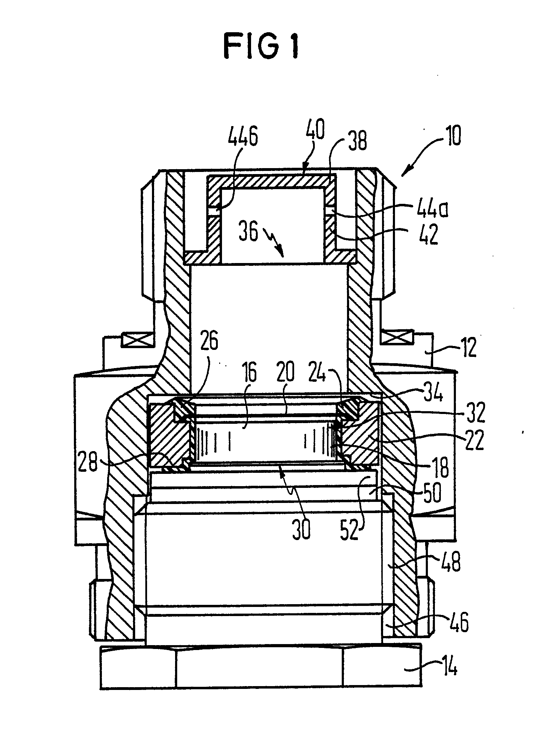

Das Sensorelement 18 besteht aus einem Halbleiterchip 54, das in einem standardisierten TO-Gehäuse untergebracht ist. Der Boden des Gehäuses wird von elektrischen Anschlußdrähten 56 durchtreten, wobei zur Verdrahtung der bevorzugten Brückenschaltung beispielsweise 8 elektrische Anschlußdrähte verwendet werden können. Der Boden 56 des TO-Gehäuses ist relativ dünn. Ein Durchbiegen des Bodens 56 wird durch die Druckaufnahmescheibe 50 verhindert, die in Fig. 1 dargestellt ist.

Zur sicheren Isolierung der Anschlußdrähte 58 gegenüber der Druckaufnahmescheibe 50 können die Anschlußdrähte im Bereich der Druckaufnahmescheibe 50 beispielsweise paarweise in Glas eingeschmolzen sein.

Für die elektrische Erfassung des abgegebenen Meßsignales können bekannte Meßverstärker verwendet werden. Besonders bevorzugt ist es, das Ausgangssignal der Wheatstone-Brückenschaltung, die auf dem Halbleiterchip 54 vorgesehen ist, über einen Chopper-Verstärker zu verstärken und einem A/D-Wandler zuzuleiten. Dessen Ausgangssignal wird als digitales Adreßsignal einem EPROM zugeleitet, wobei beispielsweise eine Auflösung von 2000 Meßpunkten möglich ist. Die in dem EPROM abgespeicherten Daten bilden ein Korrektursignal für Linearitätsfehler des jeweils verwendeten Drucksensors. Dieses digitale Korrektursignal wird einem D/A-wandler zugeleitet und als analoges Korrektursignal dem Ausgang des Chopper-Verstärkers zugeführt. Mit einer solchen Schaltung läßt sich mit geringem Aufwand bei Verwendung eines erfindungsgemäßen Drucksensors eine Linearität von 0,3% vom Endwert, eine Hysterese von 0,01% und eine Repetierbarkeit von 0,05% in einem Druckmeßbereich von 0 bis 400 bar erzielen.

Der erfindungsgemäße Drucksensor ist auch beim Vorliegen sehr starker Dauervibrationen verwendbar, da über das Formteil 24 eingeleitete Vibrationen stark gedämpft werden.

Ferner ist es auch möglich, andere Arten von Sensoren, beispielsweise Temperatursensoren, nach dem erfindungsgemäßen Verfahren herzustellen.

Bei den bislang beschriebenen Ausführungsbeispielen wird für die Membran ein ziemlich dünner Edelstahlkörper verwendet. Dieser bietet vor allem im Hochlastbereich bei Impulsbeaufschlagung den Vorteil, daß keine Kavitationen in dem Silikonöl entstehen, auch wenn die Impulse hohe Amplituden aufweisen, so daß die betriebssichere Funktion bei 400 bar gewährleistet ist.

Als eine weitere, erfindungsgemäß besonders vorteilhafte Ausgestaltung ist es vorgesehen, die Membran 20 als dünne Elastomermembran auszubilden, wobei eine Stärke von 15 μm möglich ist.

Eine derart dünne Elastomermembran ist sehr flexibel und weist eine geringe Masse auf, so daß die Impulstreue gegenüber der Edelstahlmembran 20 verbessert ist. Ferner ist sie auch bei hohen Drücken von etwa 400 bar verwendbar, wenn die Impulsamplitude bzw. -steilheit ein gewisses Maß nicht übersteigt.

Ein weiterer Vorteil besteht darin, daß der Meßbereich nach unten hin erheblich vergrößert werden kann.

Bei einer Temperaturerhöhung um 150° C dehnt sich nämlich das Silikonöl um ca. 6% aus, was zu einer Verformung der Membran führt. Diese erzeugt jedoch einerseits Nichtlinearitäten und andererseits eine Druckzunahme in dem Raum 30.

Hierbei ist es bei der Verwendung der 15 μ starken Fluorelastomermembran günstig, daß der Elastizitätsmodul des Elastomers erheblich geringer als derjenige von Stahl ist, so daß die Druckzunahme vergleichsweise niedrig ist. Daher kann es vermieden werden, daß die Druckzunahme in einem kleinen Druckbereich, beispielsweise 200 mbar, in die Größenordnung des Enddrucks in dem je vorgegebenen Meßbereich des Drucksensors kommt.

Ferner kann auch der erhebliche elektronische Zusatzaufwand zur Sicherstellung der Temperaturkompensation weitgehend vermieden werden.

Für die Elastomermembran 20 können ferner die unterschiedlichsten Materialien verwendet werden, wobei bei der Auswahl die Resistenz des jeweiligen Materials gegenüber einem aggressiven Medium, in welchem der Druck zu messen ist, berücksichtigt werden kann.

Vorzugsweise kommt ein vulkanisierbares Fluorelastomer auf der Basis von Vinylidenfluorid-Hexafluorpropylen-Copolymerisaten zur Anwendung.

Besonders günstig bei der Verwendung einer derartigen Membran ist es, wenn die Dichtlippe 26 ziemlich nahe an dem Außenumfang des Formteils 24 verlagert wird. Durch diese Maßnahme ist es überraschend möglich, auch bei sehr hohen Drücken und Temperaturen die plastische Verformung aufgrund der Restviskosität von Elastomermaterialien auf einen vernachlässigbaren Wert herabzusetzen.

Gemäß einer weiteren vorteilhaften Ausgestaltung der Erfindung weist der Meßzellenkörper 22 zu der Druckaufnahmescheibe 50 bzw. zu der Isolierstoffscheibe 52 hin einen Vorsprung auf, der verhindert, daß die Dichtlippe 28 des Formteils 24 bei extrem hohen Drücken zerquetscht wird. Bei dieser besonders vorteilhaften Ausgestaltung ist die reversible elastische Verformung der Dichtlippe 28 bis zum optimalen Dichtdruck hin gewährleistet, während bei noch höherem Druck auf die Membran 20 der Abstand zwischen dem Meßzellenkörper 22 und der Druckaufnahmescheibe 50 nicht vermindert wird und somit die Dichtlippe 28 nicht zerquetscht werden kann. Bei normalem Betriebsdruck bleiben dennoch die Vorteile der schwimmenden Lagerung des Meßzellenkörpers 22 voll gewahrt.

**Ansprüche**

1. Verfahren zur Montage eines Drucksensors, wobei ein druckfester Meßzellenkörper, ein Trägerkörper und ein Sensorelement je getrennt hergestellt werden und der sich zwischen einer Membran und dem Sensorelement erstreckende Raum vollständig mit einer inkompressiblen Flüssigkeit gefüllt wird, dadurch **gekennzeichnet,** daß die Flüssigkeit vollständig in den Raum eingebracht wird, bevor mindestens entweder die Membran oder das Sensorelement montiert worden sind.

2. Verfahren nach Anspruch 1, dadurch gekennzeichnet, daß zunächst die Membran flüssigkeitsdicht an dem Meßzellenkörper angebracht wird, daß dann die vormontierte Meßzellenkörper/Membran-Kombination in eine solche Lage gebracht wird, daß die Membran sich unten befindet, daß die Kombination darin in die Flüssigkeit, insbesondere in ein Siliconölbad, eingetaucht wird, so daß der Raum sich vollständig mit Flüssigkeit füllt, und daß das Sensorelement flüssigkeitsdicht auf den Meßzellenkörper montiert wird, bevor die Kombination aus der Flüssigkeit entnommen wird.

3. Verfahren nach einem der vorhergehenden Ansprüche, dadurch gekennzeichnet, daß die Membran während des flüssigkeitsdichten Abschließens des Raumes einwärts gedrückt wird.

4. Drucksensor, insbesondere zur Erfassung hoher Drücke in Flüssigkeiten od. dgl., mit einem Sensorelement, das in einen druckfesten Meßzellenkörper eingebaut ist und über eine Membran mit dem zu messenden Medium in Verbindung steht, wobei sich in dem Raum zwischen der Membran und dem Sensorelement eine nicht kompressible Flüssigkeit befindet, dadurch gekennzeichnet, daß die Membran (20) im druckfreien Zustand spannungsfrei gehalten ist und daß der Raum (30) vollständig von einem gegenüber dem herrschenden Betriebsdruck auch bei mechanischen Erschütterungen stabilen druckaufnehmenden Meßzellenkörper (22) ventilfrei flüssigkeitsdicht umgeben ist.

5. Drucksensor nach Anspruch 4, dadurch gekennzeichnet, daß der Raum (30) eine leicht kompressible Wandung (Formteil 24) aufweist, die sich ringförmig zwischen der Membran (20) und dem Sensorelement (18) erstreckt und an dem Meßzellenkörper (22) abgestützt ist.

6. Drucksensor nach Anspruch 4 oder 5, dadurch gekennzeichnet, daß ein elastisches Formteil (24), insbesondere aus Polymerisat oder Gummi, vorgesehen ist, in welchem die Membran (20) gelagert, insbesondere einvulkanisiert, ist.

7. Drucksensor nach Anspruch 6, dadurch gekennzeichnet, daß das elastische Formteil (24) zugleich als Dichtvorrichtung zwischen dem Sensorelement (18) und dem Meßzellenkörper (22) sowie zwischen dem Meßzellenkörper (22) und der Membran (20) dient.

8. Drucksensor nach Anspruch 6 oder 7, dadurch gekennzeichnet, daß das Formteil (24) eine Dichtlippe (26) aufweist, mit welcher der Meßzellenkörper (22) membranseitig an einem Tragkörper (12) abgestützt ist, der eine Düse (44a, 44b) aufweist, über welche die Membran (20) mit dem zu messenden Medium in Flüssigkeitsverbindung steht.

9. Drucksensor nach einem der Ansprüche 4 bis 8, dadurch gekennzeichnet, daß der Meßzellenkörper (22) die Form eines kurzen, dickwandigen Ringes aufweist und daß das Sensorelement (18) auf einer Isolierstoffscheibe (52) abgestützt ist, die ihrerseits auf einer Druckaufnahmescheibe (50) abgestützt ist.

10. Drucksensor nach einem der Ansprüche 4 bis 9, dadurch gekennzeichnet, daß der Meßzellenkörper (22) in einer Ausnehmung in dem Tragkörper (12) aufgenommen ist und von einem Verschlußteil (14) in dem Tragkörper (12) ortsfest gehalten wird, wobei das Formteil (24) sensorseitig eine Abdichtung (Dichtlippe 28) zwischen dem Meßzellenkörper (22) und dem Verschlußteil (14) bildet und die Druckaufnahmescheibe (50) auf dem insbesondere eingeschraubten Verschlußteil (14) abgestützt ist.

11. Drucksensor nach einem der Ansprüche 4 bis 10, dadurch gekennzeichnet, daß in den Tragkörper (12) ein Wandteil (38) mit einer druckfesten Prallfläche (40) eingebaut ist, welche sich vor der Membran (20) im wesentlichen über die ganze Fläche der Membran (20) erstreckt, und daß der Durchmesser der Düsenöffnung (44a, 44b), die in dem Wandteil (38) ausgebildet ist, erheblich kleiner als der Membrandurchmesser ist.

12. Drucksensor nach Anspruch 11, dadurch gekennzeichnet, daß die Prallfläche (40) zum zu messenden Medium hin vorspringt und daß die Düsenöffnung (44a, 44b) seitlich vorgesehen ist.

13. Drucksensor nach einem der Ansprüche 10 oder 11, dadurch gekennzeichnet, daß mindestens zwei Düsenöffnungen (44a, 44b) vorgesehen sind.

14. Drucksensor nach einem der Ansprüche 4 bis 13, dadurch gekennzeichnet, daß das Sensorelement (18) in an sich bekannter Weise als piezoelektrisches Element in einer Brückenschaltung ausgebildet ist, wobei die Brückenschaltung auf dem Sensorelement in (18) integrierter Form angebracht ist.

15. Drucksensor nach einem der Ansprüche 9 bis 15, dadurch gekennzeichnet, daß Anschlußdrähte (58) vorgesehen sind, die das Sensorelement (18), die Isolierstoffscheibe (52) und die Druckaufnahmescheibe (50) durchtreten.

16. Drucksensor nach einem der Ansprüche 9 bis 15, dadurch gekennzeichnet, daß die Abstützscheibe aus Metall, insbesondere aus V4a-Stahl, besteht und 4 symmetrisch angeordnete Bohrungen aufweist, die von je zwei Anschlußdrähten (58) durchtreten werden.

17. Drucksensor nach einem der Ansprüche 4 bis 16, dadurch gekennzeichnet, daß das Ausgangssignal des Sensorelements (18) einem Chopper-Verstärker und weiter einem A/D-Wandler zugeleitet wird, dessen Ausgangssignal zur Fehlerkorrektur verwendet wird.

18. Drucksensor nach einem der Ansprüche 4 bis 17, dadurch gekennzeichnet, daß die Membran (20) eine sehr dünne Elastomermembran, beispielsweise in einer Stärke von 15 μm, ist und nach der Art des zu messenden Mediums ausgewählt ist.

19. Drucksensor nach einem der Ansprüche 4 bis 18, dadurch gekennzeichnet, daß der Meßzellenkörper (22) einen mindestens zu einem druckfest mit dem Tragkörper (12) verbundenen Teil wie der Druckaufnahmescheibe (50) hin wirkenden Anschlag aufweist, mit welchem der Meßzellenkörper (22) zur Aufrechterhaltung eines optimalen Dichtdrucks an der Dichtlippe (28) oberhalb eines vorgegebenen Eingangsdrucks abstützbar ist.

# FIG 1

# FIG 2